# EUROPÄISCHE PATENTSCHRIFT

(11) **EP 0 621 921 B1**
(45) Veröffentlichungstag und Bekanntmachung des Hinweises auf die Patenterteilung: **19.07.1995**
(21) Anmeldenummer: 92924555.3
(22) Anmeldetag: 08.12.1992
(51) Int. Cl.: F02B 29/04

(54) **VERFAHREN ZUM BETRIEB EINES SCHIFFSDIESELMOTORS**
PROCESS FOR RUNNING A MARINE DIESEL ENGINE
PROCEDE POUR LE FONCTIONNEMENT D'UN MOTEUR DIESEL MARIN

(30) Priorität: 14.01.1992 DE 4200661
(43) Veröffentlichungstag der Anmeldung: 02.11.1994
(73) Patentinhaber: OCHOTZKI, Horst, 52249 Eschweiler (DE)
(72) Erfinder: OCHOTZKI, Horst, 52249 Eschweiler (DE)
(74) Vertreter: König, Werner, Dipl.-Ing.
(86) Internationale Anmeldenummer: DE9201019
(87) Internationale Veröffentlichungsnummer: WO9314306

(56) Entgegenhaltungen:
- DE-A- 3 226 883
- DE-A- 3 929 123
- PATENT ABSTRACTS OF JAPAN vol. 8, no. 270 (M-344) 11. Dezember 1984 & JP-A-59 1 417 (ISHIKAWAJIMA HARIMA JUKOGYO K.K.) 14. August 1984

## Beschreibung

Die Erfindung betrifft ein Verfahren zum Betrieb eines Schiffsdieselmotors, bei dem den Zylindern des Motors von einem Abgasturbolader Ladeluft zugeführt wird, die über einen mit Seewasser gekühlten Ladeluftkühler geführt wird.

Es ist bekannt, daß Ladeluftkühler, z.B. solche bei Schiffsdieselmotoren, allmählich ladeluftseitig verschmutzen, so daß sich ihr Durchströmungswiderstand dementsprechend erhöht. Dies wiederum führt zu einer Reduzierung des Ladeluftdrucks an der Brennkraftmaschine und damit zu einer Absenkung der Maschinenleistung, zu deren Kompensierung dann ein größerer Brennstoffverbrauch in Kauf genommen werden muß. Gleichzeitig ergibt sich auch eine erhöhte Belastung des Abgasturboladers.

Es ist nun bereits eine Brennkraftmaschine mit einem Abgasturbolader bekannt (DE 36 27 686 A1), die eine Ladeluftleitung aufweist, in deren Verlauf ein Ladeluftkühler angeordnet ist. Damit während der Warmlaufphase dieser Brennkraftmaschine über den gesamten Last- und Drehzahlbereich relativ hohe Ladelufttemperaturen gegeben sind, aber dennoch bei betriebswarmer Brennkraftmaschine Probleme aufgrund zu hoher Ladelufttemperaturen nicht auftreten können, ist von der Ladeluftleitung eine den Ladeluftkühler umgehende ungekühlte Bypassleitung abgezweigt, über die bis zum Erreichen einer vorgegebenen Brennkraftmaschinentemperatur der gesamte Ladeluftstrom geführt wird. Ist die Betriebstemperatur der Brennkraftmaschine dann einmal erreicht, wird die Bypassleitung mittels einer geeigneten Umschalteinrichtung versperrt und die gesamte Ladeluft über den Ladeluftkühler geführt.

Weiter ist es bekannt (DE 39 29 123 A1), bei einer Brennkraftmaschine der zuvor beschriebenen Art die Umschalteinrichtung in Abhängigkeit von der durch einen im Bereich einer Ladeluft- oder Abgasleitung der Brennkraftmaschine angeordneten Temperaturfühler oder dgl. erfaßbaren Temperatur zu steuern. Die Umschalteinrichtung braucht deshalb nicht in einer Ein/Aus-Charakteristik betrieben zu werden, sondern kann in Abhängigkeit von der Höhe der erfaßten Temperatur mehr oder weniger in eine Zwischenschaltung bewegt werden, was eine genauere Anpassung an Umluft- und Motorbetriebsverhältnisse erlaubt.

Ferner ist eine Kühlanordnung für Verbrennungskraftmaschinen relativ großer Leistung bekannt (DE 36 17 350 C1), die einen Kühlwasserzwangsumlauf zur Kühlung von Turbolader, Motor und Ladeluftkühler aufweist. Die Ladeluft wird dabei vollständig über den Ladeluftkühler geführt. Dabei soll sich eine lastabhängige Selbstregelung der Ladelufttemperatur ohne zusätzliche Regelorgane ergeben.

Es ist weiter eine für den Yachtantrieb bestimmte seewassergekühlte Brennkraftmaschine bekannt (MTZ Motortechnische Zeitschrift 49 (1988) 7/8, Seiten 294, 295), bei der größter Wert auf die Kühlung u.a. der Ladeluft gelegt wird, um die Wärmeabstrahlung und damit auch die Aufheizung des Motorraumes so niedrig wie möglich zu halten. Zu diesem Zweck wird die Ladeluftkühlung mit einem Wassermantel versehen.

Ausgehend von diesem Stand der Technik besteht die Aufgabe der vorliegenden Erfindung nun darin, ein Verfahren zum Betrieb eines Schiffsdieselmotors anzugeben, mit dem der von der Ladeluft zu überwindende Widerstand insgesamt gesenkt und damit der Ladedruck und daraus resultierend die Leistung der Maschine gesteigert oder bei fortlaufender Erhöhung des Widerstandes des Ladeluftkühlers beibehalten werden kann. Gleichzeitig soll der Kraftstoffverbrauch der Maschine reduziert und die Belastung des Abgasturboladers gesenkt werden.

Diese Aufgabe wird bei einem Verfahren der eingangs erwähnten Art erfindungsgemäß dadurch gelöst, daß der Ladeluftkühler mit konstantem Kühlmitteldurchsatz betrieben wird, daß auch während des Normalbetriebs des Schiffsdieselmotors ein Teil der Ladeluft am Ladeluftkühler vorbeigeführt wird, und daß dieser Teil der Ladeluft mengenmäßig so bestimmt wird, daß sich hinter dem Ladeluftkühler für die gesamte Ladeluftmenge eine Ladelufttemperatur ergibt, die über dem Taupunkt liegt und die für den Schiffsdieselmotor höchst zulässige Temperatur nicht überschreitet und daß der am Ladeluftkühler vorbeigeführte Teil der Ladeluft mantelgekühlt wird.

Immer wenn die gesamt verfügbare Kühlleistung des Ladeluftkühlers z.B. aufgrund einer tiefen Kühlwassertemperatur dazu führen würde, daß die Ladelufttemperatur dann zu tief abgesenkt werden würde, wird ein Teil der Ladeluft am Ladeluftkühler vorbeigeführt. Die Menge dieses Teils der Ladeluft wird so gesteuert, daß das resultierende Ladeluftgemisch insgesamt die zulässigen Temperaturwerte stromab des Ladeluftkühlers nicht überschreitet. Die am Ladeluftkühler vorbeigeführte Ladeluftmenge hat einen deutlich geringeren Widerstand zu überwinden als die durch den Ladeluftkühler geführte Ladeluft. Daraus ergibt sich eine erwünschte Erhöhung des Ladeluftdrucks stromab des Ladeluftkühlers. Daraus folgt eine Reduktion der Belastung des Abgasturboladers einerseits und eine Erhöhung der Maschinenleistung bzw. Beibehaltung der Maschinenleistung auch bei z.B. aufgrund von Verschmutzung steigendem Widerstand des Ladeluftkühlers.

Eine Regelung der Ladelufttemperatur kann dann allein über die Bestimmung des am Ladeluftkühler vorbeigeführten Ladeluftanteils erfolgen.

Die Mantelkühlung hat zwar einen relativ geringen Wirkungsgrad, bewirkt aber eine weitere erwünschte Absenkung der Ladelufttemperatur ohne Erhöhung des Strömungswiderstands für den durch die Bypassleitung geführten Anteil der Ladeluft.

Das erfindungsgemäße Verfahren wird vorzugsweise so betrieben, daß die Ladelufttemperatur auf einem Wert zwischen 40 und 45° Celsius gehalten wird.

Im folgenden Teil der Beschreibung wird das erfindungsgemäße Verfahren anhand einer schematischen Maschinendarstellung beschrieben.

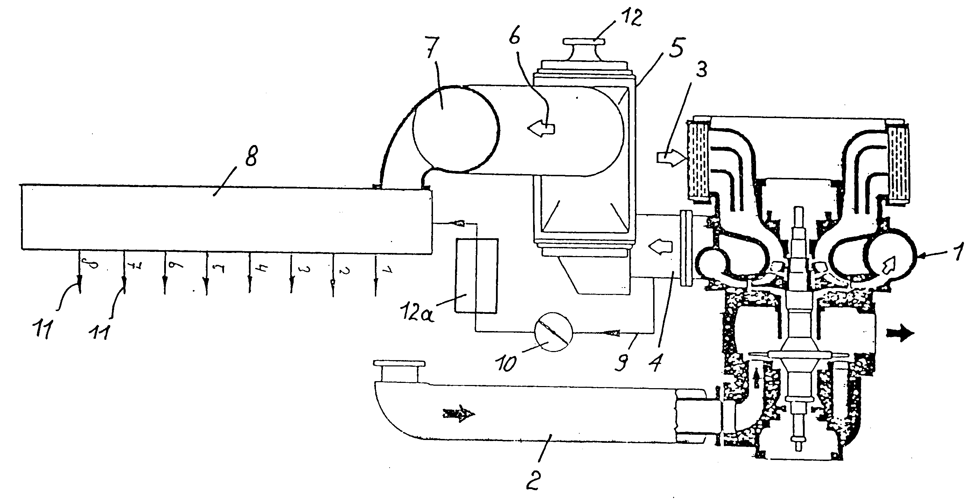

In der Zeichnung ist ein Abgasturbolader 1 üblicher Bauart dargestellt, der von den Abgasen einer nicht im einzelnen dargestellten Brennkraftmaschine angetrieben wird. Diese Abgase werden über eine Abgasleitung 2 dem Abgasturbolader 1 zugeleitet.

Der Abgasturbolader 1 saugt Frischluft in Richtung des Pfeils 3 an und fördert sie in den ersten Teil 4 einer Ladeluftleitung, die in einen seewassergekühlten Ladeluftkühler 5 mündet. Aus dem Ladeluftkühler 5 tritt die gekühlte Ladeluft in Richtung des Pfeils 6 durch einen zweiten Teil 7 der Ladeluftleitung aus und gelangt in eine Mischkammer 8. Es ist ferner eine den Ladeluftkühler 5 umgehende Bypassleitung 9 vorgesehen, die an den ersten Teil 4 der Ladeluftleitung angeschlossen ist und ebenfalls in die Mischkammer 8 mündet. In der Bypassleitung 9 befindet sich ein Steuerventil 10.

Die Mischkammer 8 ist jeweils über eine Anschlußleitung 11 an die nicht dargestellten Zylinder der Brennkraftmaschine angeschlossen.

Der Ladeluftkühler 5 hat einen Anschluß 12 für die Zu- und Abführung von Seewasser als Kühlmittel.

Wenn die gesamte aus dem Abgasturbolader 1 austretende Ladeluft über die Ladeluftleitung 4, 7 durch den Ladeluftkühler 5 geführt und wenn dabei mit maximalem Kühlmitteldurchsatz gearbeitet wird, dann wird die Ladelufttemperatur in der Regel zu tief abgekühlt werden. Um dies zu vermeiden, müßte folglich mit einem reduzierten Durchsatz an Kühlmittel gearbeitet werden. Nach dem erfindungsgemäßen Verfahren wird nun so vorgegangen, daß ein Teil der Ladeluft über die Bypassleitung 9 und das Steuerventil 10 also ungekühlt der Mischkammer 8 zugeführt wird. Es werden also in der Mischkammer 8 zwei Ladeluftströme miteinander vermischt, von denen der eine den Ladeluftkühler 5 durchströmt hat und abgekühlt ist während der andere über die Bypassleitung 9 zugeführt wurde. Der Anteil der Ladeluft, der durch die Bypassleitung 9 hindurchgeführt wird, wird durch das Steuerventil 10 so bestimmt, daß sich für die Gesamt-Ladeluft in der Mischkammer 8 eine Ladelufttemperatur ergibt, welche die für die Brennkraftmaschine zulässige Ladelufthöchsttemperatur nicht überschreitet. In der Regel wird die Ladeluft deshalb im Bereich von 40 bis 45° Celsius zu halten sein. Durch diese Maßnahme wird der Ladeluftdruck in der Mischkammer 8 erhöht, da der Anteil der Ladeluft, der durch die Bypassleitung 9 geführt wird, ein höheres Druckniveau hat als der Teil, der den Ladeluftkühler 5 passiert hat, da der Strömungswiderstand des Ladeluftkühlers 5 selbstverständlich viel höher ist, als der der Bypassleitung 9. Eine Erhöhung des Ladeluftdrucks in der Mischkammer 8 führt aber zu einer Leistungserhöhung der Brennkraftmaschine bzw. für die gleiche Leistung der Brennkraftmaschine wird eine geringere Belastung des Abgasturboladers 1 erforderlich. Die Zylinder der Brennkraftmaschine werden besser gespült und effektiver geladen.

Durch das gesteuerte öffnen der Bypassleitung 9 kann damit auch einem Abfallen des Ladeluftdrucks entgegengewirkt werden, das sich z.B. durch eine ladeluftseitige Verschmutzung des Ladeluftkühlers 5 ergibt. Nach dem erfindungsgemäßen Verfahren wird also in dem Ladeluftkühler 5 die Ladeluft in Abhängigkeit von den Temperaturen des als Kühlmittel verwendeten Seewassers so tief wie zulässig abgekühlt. Diese Temperatur wird dann dadurch innerhalb des für die Brennkraftmaschine zulässigen Temperaturbereichs angehoben, daß ein Teil der Ladeluft am Ladeluftkühler 5 vorbeigeführt und somit ungekühlt der Mischkammer 8 zutritt.

Die Bypassleitung 9 kann mit einem Mantelkühler 12 versehen sein, der ebenfalls von Seewasser durchströmt wird. Dieser Mantelkühler 12 erhöht den Strömungswiderstand der Bypassleitung 9 nicht, führt aber dennoch zu einer geringen Kühlung des durch die Bypassleitung 9 geführten Teils der Ladeluft. Dies hat zur Folge, daß ein größerer Anteil der Ladeluft unter Einhaltung der Temperatur in der Mischkammer 8 durch die Bypassleitung 9 hindurchgeführt werden kann, wodurch der Ladedruck weiter erhöht bzw. die Belastung des Abgasturboladers 1 weiter gesenkt wird.

## Patentansprüche

1. Verfahren zum Betrieb eines Schiffsdieselmotors, bei dem den Zylindern des Motors von einem Abgasturbolader Ladeluft zugeführt wird, die über einen mit Seewasser gekühlten Ladeluftkühler geführt wird,
**dadurch gekennzeichnet**,
daß der Ladeluftkühler mit konstantem Kühlmitteldurchsatz betrieben wird,
daß auch während des Normalbetriebs des Schiffsdieselmotors ein Teil der Ladeluft am Ladeluftkühler vorbeigeführt wird, und daß dieser Teil der Ladeluft mengenmäßig so bestimmt wird, daß sich hinter dem Ladeluftkühler für die gesamte Ladeluftmenge eine Ladelufttemperatur ergibt, die über dem Taupunkt liegt und die für den Schiffsdieselmotor höchst zulässige Temperatur nicht überschreitet und
daß der am Ladeluftkühler vorbeigeführte Teil der Ladeluft mantelgekühlt wird.

2. Verfahren nach Anspruch 1, dadurch gekennzeichnet, daß die Ladelufttemperatur auf einem Wert zwischen 40° und 45° Celsius gehalten wird.

## Claims

1. Procedure for running a marine diesel engine, where the cylinders of the engine are supplied with charge air from an exhaust gas turbo charger and where said charge air is conducted through a sea-water-cooled charge air cooler,
characterized in that
the charge air cooler is run with a constant amount of coolant throughput,
that even during normal operation of the marine diesel engine a part of the charge air by-passes the charge air cooler,
and that this part of the charge air quantitatively is determined in such a manner that downstream of the charge air cooler the total charge air has a temperature which is above the daw-point and does not exceed the maximum permissible temperature of the marine diesel engine and
that the part of the charge air which by-passes the charge air cooler is jacket cooled.

2. Procedure according to claim one, characterized in that the charge air temperature is held to a value between 40 and 45° Cel.

## Revendications

1. Procédé pour le fonctionnement d'un moteur diesel marin dans lequel la charge est envoyée aux cylindres du moteur par une turbosoufflante à gaz d'échappement qui est pilotée par un refroidisseur de charge refroidi par l'eau de mer, **caractérisé en ce que** le refroidisseur de charge est employé avec un débit constant de refroidisseur, en ce que même pendant l'utilisation normale du moteur diesel marin, une partie de la charge passe devant le refroidisseur de charge, et que cette partie de la charge est déterminée de telle manière que, derrière le refroidisseur de charge, et pour toute la quantité de charge, soit obtenue une température de charge supérieure au point de rosée sans que la température admissible du moteur diesel marin ne soit dépassée, et enfin que la partie de la charge passant devant le refroidisseur de charge est refroidie par enveloppe réfrigérante.

2. Procédé selon la revendication 1, caractérisé en ce que la température de charge est maintenue à une valeur située entre 40 et 45°C.
